# EUROPEAN PATENT APPLICATION

(11) **EP 2 543 464 A2**
(43) Date of publication of application: **09.01.2013**
(21) Application number: 12466014.3
(22) Date of filing: 02.07.2012
(51) Int. Cl.: B23K 26/03, B23K 26/12, B23K 26/06, G02B 26/08

(54) **Apparatus for laser beam welding and method for controlling quality of weld**

(30) Priority: 04.07.2011 CZ 20110408
(71) Applicant: Ustav Pristrojove Techniky Akademie Ved CR. V.V.I., 61264 Brno (CZ)
(72) Inventor: Jedlicka, Petr, 637 00 Brno (CZ); Mrna, Libor, 627 00 Brno (CZ); Rerucha, Simon, 635 00 Brno (CZ); Sarbort, Martin, 628 00 Brno (CZ)
(74) Representative: Kania, Frantisek

(57) **Abstract**

The laser beam welding device comprises a laser beam source (1) and an associated optical system (2) of a laser welding head (4). The optical system (2) of the laser welding head (4) includes a focusing lens (3) and an active optical element having variable focal length, which is controllable by means of a control unit (9). At least one photodetector (10) is connected to an input of a control unit (9), said detector being adapted for sensing a radiation emitted by a plasma rising from a welding area (11). The control unit (9) is provided with a frequency analyzer for evaluating signals received from the photodetectors (10). The frequency analyser contains a unit for performing Fourier transform.

The active optical element typically contains a pressure vessel (6), which comprises a resilient mirror (7) for directing and shaping an incident laser beam (5), the resilient mirror (7) forming one wall of the pressure vessel (6). The pressure vessel (6) is connected to a pressure regulator (8) for controlling a pressure inside the pressure vessel (6) in order to adjust a curvature of the resilient mirror (7), a control input of the pressure regulator (8) being connected to a control output of the control unit (9). The pressure regulator (8) typically contains a proportional valve. The photodetectors (10) are preceded by optical filters for a selection of a spectral band of a respective incident radiation A working principle of the device consists in that the photodetector (10) senses the radiation emitted by a plasma cloud rising from the welding area (11), this radiation is in turn analyzed by means of a fast Fourier transform and the active optical element continuously shapes the laser beam (5) in accordance with the analysis in order to achieve an optimum quality of the weld.

## Description

### Technical field

The present invention relates to a laser beam welding device which comprises a laser beam source and an associated optical system.

### State of the art

When a metal material is welded by means of laser beam device having an output power in the order of kilowatts, the incident laser beam causes the creation of so called "keyholes" in the material, which are narrow capillaries filled with ionized vapours of the metal being welded. Such vapours or plasma particles partly escape from the keyhole, forming a bright shining cloud above the same. Within the material being welded, an zone of molten metal begins to form around the keyhole. As the laser beam moves along the material, the molten metal gradually solidifies inside said zone, thus forming the weld itself. The depth of the weld is virtually identical with that of the keyhole. The above described process is referred to as penetration welding.

The formation of the keyhole is dependent on a sufficient density of energy transferred by the incident laser beam. If the above condition is met, a comparatively deep weld penetration can be achieved. If the above condition is not met, the formation of the keyhole is not feasible. In the latter case, only a zone of molten metal would be formed, the depth thereof being comparatively small. Again, as the laser beam moves along the material, the molten metal solidifies, thus forming a weld. This process is referred to as conduction welding.

In the course of a welding process, various weld defects may arise, such as decrease of the root penetration depth, weld porosity etc. At the present time, there are several methods which enable a real-time detection of different types of weld defects to be carried out with a certain level of reliability during the welding process. Such methods are mostly based on the analysis of radiation strength, the radiation concerned originating in the plasma cloud above the keyhole or directly in the molten metal surrounding the keyhole.

Nowadays, the practical industrial applications are mostly based on the employment of welding systems which do not enable the welding parameters, such as laser power, velocity of weld formation, location of the focal plane with respect to the surface of the material being welded, to be readjusted during the welding process. This means that once started, the welding process cannot be actively controlled. Such control, however, would be desirable because the ability of achieving the necessary depth and quality of a weld and subsequent maintaining the same are critical requirements during a welding process.

One of the drawbacks of the present state consists in that the values of welding parameters, such as laser power, velocity of weld formation, location of the focal plane with respect to the surface of the material being welded, which are in relation with the required depth and quality of the respective weld, are determined by means of experimental methods, such methods typically requiring a relatively high number of test welds to be examined. The corresponding procedure is rather lengthy and does not ensure a sufficient level of reliability.

The optimum values of welding parameters, which are determined on test welds in an experimental manner, mostly have to be set in the welding system as fixed ones prior to the beginning of the welding process. In the course of the welding process, the respective settings cannot be changed any more and so the process is not actively controlled.

The above impracticability of an active process control implies the main drawback of the present defect detection methods which consists in the inability to respond to a detected defect in a real-time manner or even to prevent such defect from occurring.

Another drawback of the present defect detection methods consists in that they are mostly based on the comparison of the waveform of a specific quantity measured on the weld being evaluated with the waveform of the same quantity measured on a reference weld that is considered to be an optimum one in terms of the desired depth and quality. The latter procedure does not ensure a sufficient level of reliability either.

### Summary of the invention

The above drawbacks of the prior art are largely eliminated by the laser-beam welding device, which comprises a laser beam source and an associated optical system of a laser welding head, according to the invention, wherein the optical system of the laser welding head includes a focusing lens and an active optical element having variable focal length, which is controllable by means of a control unit, and at least one photodetector connected to the input of the control unit and adapted for sensing the radiation emitted by the plasma cloud hovering over the welding area, the control unit being further provided with a frequency analyzer for evaluating the signals received from the photodetectors.

According to a preferred embodiment of the laser-beam welding device, the active optical element is formed by a pressure vessel, which comprises a resilient mirror for directing and shaping the incident laser beam, said resilient mirror forming one wall of said pressure vessel. The pressure vessel is connected to a pressure regulator for controlling the pressure inside the pressure vessel in order to adjust the curvature of the resilient mirror. The control input of the above pressure regulator is connected to the control output of the control unit.

According to another preferred embodiment of the laser-beam welding device, the focusing lens is movable along the centre line of the laser beam passing therethrough.

The pressure regulator preferably contains a proportional valve.

Alternatively, the active optical element could contain an objective lens having variable focal length.

In a further preferred embodiment, the frequency analyser contains a unit for performing Fourier transform.

The pressure vessel can be connected to an air pump or to a fluid pump.

Another advantageous aspect of the laser beam welding device according to the invention proved to be the arrangement of an air nozzle in the vicinity of the welding area, said air nozzle being directed to the space over the welding area in order to protect the focusing lens against the spattering molten metal released from the weld pool.

In addition, the zone of the air nozzle can be separated from the space over the welding area by a diaphragm arranged between the focusing lens and the welding area.

Another measure, which can be taken to improve the functionality of the laser beam welding device, is to provide a gas nozzle arranged in the vicinity of the welding area and directed to the to the space over the same for the injection of protective gas to prevent oxidation of the weld.

In a yet another preferred embodiment of the laser beam welding device according to the invention, the active optical element contains a resilient mirror for directing and shaping the incident laser beam, said resilient mirror being provided with an electromechanical unit for adjusting the curvature of the resilient mirror, the control input of said electromechanical unit being connected to the control output of the control unit.

According to a particularly preferred embodiment of the invention, the photodetectors can be preceded by optical filters for a selection of the spectral band of the respective incident radiation.

The above mentioned drawbacks of the prior art are also largely eliminated by the method of welding quality control employing the aforesaid device according to the invention, wherein the radiation emitted by the plasma cloud rising from the weld area is sensed, afterwards a frequency spectrum is calculated from the time-based pattern of the strength of said radiation by means of the Fourier transform. Then, the individual amplitudes of the frequency spectrum are divided by the sum of all the amplitudes and the resulting standardized frequency spectrum is further evaluated by means of the following two methods. The first method consists in that first the sums Ai of the amplitudes within selected frequency bands i are calculated, where A is an amplitude within a selected frequency band i and i is a natural number, subsequently the values of selected ratios Ai/Aj are calculated, where j is a natural number that is different from i, and finally the shape and the focal length of the welding beam are adjusted in accordance with the determined ratios Ai/Aj. The second method consists in that a straight line is interpolated from the points of a standardized frequency spectrum by means of the least-squares method, each of said points being defined by the respective frequency value and by the corresponding amplitude, then the sum S of the squares of the deviations of the individual points, which are lying within the frequency spectrum, from the interposed straight line is calculated and finally the shape and the focal length of the welding beam are adjusted until the minimum value of the quantity S is reached.

### Brief description of the drawings

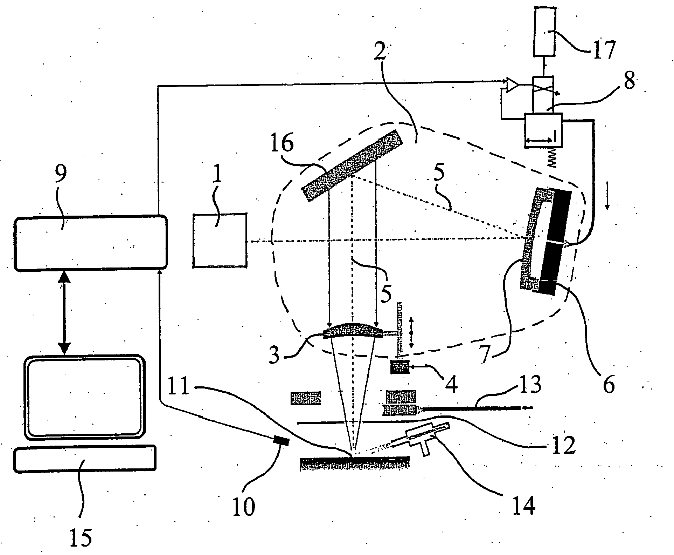

For more detail, the present invention will be further described with reference to the accompanying drawing showing an exemplifying embodiment of the laser beam welding device according to the invention.

### Exemplifying embodiments of the invention

The accompanying figure shows a schematic view of an exemplifying embodiment of the laser beam welding device according to the invention. The device comprises the laser beam source 1 and the associated optical system 2 that includes the focusing lens 3 secured inside the welding head 4, the focusing lens being movable along the centre line of the laser beam 5 passing therethrough, and an active optical element. In this exemplary embodiment, the active optical element is formed by the pressure vessel 6, which comprises the resilient mirror 7 for directing and shaping the incident laser beam 5, the resilient mirror 7 forming one wall of the pressure vessel 6. The reflective face of the resilient mirror 7 is arranged on the outer shell of the pressure vessel 6. The pressure vessel 6 is connected through the pressure regulator 8 to the pump 17 for pressurizing the interior of the pressure vessel 6 in order to control the curvature of the resilient mirror 7. The pressure regulator 8 may consist, for example, of a proportional valve. The control input of the pressure regulator 8 is connected to the control output of the control unit 9. The curvature of the reflective face of the resilient mirror 7, which is arranged on the outer shell of the pressure vessel 6, is controllable by means of the pressure regulator 8 adjusting the pressure inside the pressure vessel 6. The photodetector 10, which is connected to the input of the control unit 9, is provided with an optical filter (not shown) and adapted for sensing the radiation emitted by the plasma rising from the welding area 11. Although only a single photodetector 10 is shown in the figure, the arrangement may comprise multiple photodetectors 10, each being provided with a different filter so that each of the photodetectors 10 can only receive that portion of the radiation from the welding area 11, which corresponds to the spectral band passing through the associated filter. Thus, multiple different values can be obtained, the ratio of such values carrying the information relating to the quality of the weld. The device further includes the diaphragm 12 arranged between the focusing lens 3 and the welding area 11 and the air nozzle 13 arranged in the vicinity of the welding area 11 and directed to the space over the same in order to protect the focusing lens 3 against the spattering molten metal released from the weld pool. In addition, the device includes the gas nozzle 14 arranged in the vicinity of the welding area 11 and directed to the to the space over the same for the injection of protective gas to prevent oxidation of the weld. The operating parameters of the control unit 9 are set by the computer 15.

Nevertheless, the active optical element may be also realized in different ways. The resilient mirror 7 for focusing the incident laser beam 5 does not need to form a part of the pressure vessel 6. Instead, the resilient mirror 7 can be controlled in a mechanical manner, for example by means of an actuator imparting pressure to the reverse side of the mirror 7.

Another alternative of the active optical element poses that consisting of an objective having variable focal length. Such optical element would enable the positions of the lenses included therein to be controlled in an active manner. For example, if the welding head 4 is connected to an optical fibre, through which the laser beam is being input, the mutual position of the callimating and focusing lenses and, moreover, the relative positions of those two lenses with respect to the end of the optical fibre can be controlled.

When the laser beam device according to the present exemplary embodiment of the invention is in operation, the laser beam source 1 emits the laser beam 5 towards the pressure vessel 6 where the laser beam 5 is refracted by the resilient mirror 7 and diverted towards the passive mirror 16. After having been reflected from the latter mirror, the laser beam 5 passes through the focusing lens 3 that is secured inside the welding head 4. By changing the parameters of the active optical element, such as the curvature of the resilient mirror 7 or the mutual position of the objective lenses having variable focal lengths, a desirable change to the geometrical parameters of the laser beam 5 can be achieved. In this manner, the diameter and position of the focal spot of the laser beam 5 along with the divergence of the same can be adjusted. After having passed through the focusing lens 3, the laser beam 5, which was initially almost parallel, is focused and impinges on the surface of the material. This results in the formation of a keyhole and a plasma cloud over it.

The horizontal air stream supplied by the air nozzle 13 protects the focusing lens 3 against the spattering molten metal released from the weld pool. In order to prevent the oxidation of the weld pool, the gas nozzle 14 supplies protective gas or process gas, typically argon or helium, into the space over the welding area 11.

The radiation emitted by the plasma cloud is sensed by the photodetectors 10 which are provided with filters. After having been captured with a specific sampling rate, the strength values are converted to a digital format and subsequently digitally processed by the control unit 9.

After having analyzed the captured time-based pattern of the strength in a built-in computing module, the control unit 9 sends a control signal to the control input of the pressure regulator 8 which, in turn, controls the air pressure inside the active optical element. Varying pressure acting on the resilient mirror 7 inside the pressure vessel 6 causes the curvature of the former to change which results in a corresponding adjustment of the geometric shape and focal position of the laser beam 5. Such adjustment then leads to the desired changes in the depth and quality of the weld.

Thus, both the depth and the quality of a weld depend on the selected values of the respective welding parameters.

The following values can be influenced by the individual settings of the welding system: power of the laser beam 5, welding speed or feed rate of the laser beam 5, location of the focal plane of the laser beam 5 relative to the surface of the material being welded, and shape of the laser beam 5.

Furthermore, the depth and quality of a weld depend on the particular thermal properties of the material being welded as well as on the chemical composition and flowrate of the process gas providing the protective atmosphere around the keyhole during the welding process.

The photodetectors 10, which are provided with optical filters, scan the radiation emitted by the plasma cloud, wherein UV radiation and visible radiation are primarily concerned, and by the molten metal, in which case infrared radiation is primarily concerned. The optical filters, which are arranged between the welding area 11 and the photodetectors 10, enable the radiation in various spectral bands to be scanned.

The information relating to the progression of the welding process is obtained by means of a signal processor, which forms a part of the control unit 9, on the basis of the time pattern of the radiation strength measured by the photodetectors 10. The photodetectors 10 may be mounted on various components of the welding system, e.g, on the welding head 4, or anywhere within the framework of the optical system, taking account of the direction of the incoming laser beam 5, Different locations of the photodetector 10 relative to the keyhole and to the plasma cloud enable to continuously obtain different records of the time-based patterns of the radiation strength. The results of the subsequent evaluation of the time-based patterns make it possible to obtain the required information relating to the current state of the welding process.

On the basis of the results of the frequency analysis of the radiation emitted by the plasma cloud accompanying the welding process concerned and the radiation emitted by the molten metal, the control unit 9 generates a control signal for the active optical element. The evaluation is based on the fact that the optimum welding process can be characterized by a specific frequency spectrum of the signal being scanned.

In any given moment, the input data for the signal processor are represented by an N-point record of the radiation strength captured during the preceding time interval having the length T, the respective sampling frequency F being in the order of units or tens kHz. After having received the input data, the signal processor employ the Fast Fourier Transform (FFT) to calculate the N-point frequency spectrum in the range of 0 -- F/2 Hz, the individual amplitudes within said frequency spectrum being divided by the sum of all the amplitudes. The resulting standardized frequency spectrum then undergoes a further evaluation. Hereinafter, two different methods for evaluating the frequency spectrum will be described.

The first method consists in that first the sums Aᵢ of the amplitudes within appropriately selected frequency bands i are calculated, where A is an amplitude within a selected frequency band i and i is a natural number.

In any given moment, the signal processor obtains the information relating to the welding process from the values of selected ratios Aᵢ/Aⱼ, where j, is a natural number that is different from i, or from the quantities Aᵢ alone, The key aspect of the method according to the invention is then used for the real-time control of the welding process itself - in the case of the optimum welding mode, i.e. when the required values of the depth and quality of the weld are obtained by means of the most suitable adjustment of the active optical element, the ratios Aᵢ/Aⱼ or the quantity Aᵢ are assuming their maximum, minimum or particular characteristic numerical values, respectively.

Therefore, the control algorithm used is based on monitoring the variation of the values of the ratios Aᵢ/Aⱼ or quantities Aᵢ over time and on the subsequent generation of the control signal which governs the active optical element in a manner ensuring the optimum welding performance.

The frequency bands, which are deemed suitable for obtaining the information relating to the state of the welding process, may vary depending on the welding parameters, such as the power of the laser device, the feed rate of the laser beam or the protective gas used, and on the properties of the material being welded.

For example, when welding carbon steel by means of a CO₂ laser having the power of 2 kW, with the feed rate of 1 m/min and the protective atmosphere of argon, the flowrate of the latter being 10 litres/min, it is possible to select the sampling rate of 20 kHz to monitor the time-based pattern of the quantity A₁ calculated for the frequency band 2 - 4 kHz in order to capture the maximum value of said quantity indicating the optimum welding mode. Similarly, after having calculated the quantity A₂ relating to the frequency band 0,6 - 1,2 kHz and the quantity A₃ relating to the frequency band 1,2 - 1,8 kHz, it is possible to monitor the value of the ratio A₃/A₂, the optimum welding mode being indicated by the value A₃/A₂ = 1.

The second method consists in that a straight line is interpolated from the points of the standardized frequency spectrum by means of the least-squares method, each of said points being defined by the respective frequency value and by the corresponding amplitude, and subsequently the sum S of the squares of the deviations of the individual points, which are lying within the frequency spectrum, from the interposed straight line is calculated.

In any given moment, the signal processor obtains the information relating to the welding process from the values of the sums S. The key aspect of the method according to invention is then used for the real-time control of the welding process itself - in the case of the optimum welding mode, i.e. when the required values of the depth and quality of the weld are obtained by means of the most suitable adjustment of the active optical element, the quantity S is assuming its minimum value.

Therefore, the algorithm used for controlling the welding quality is based on monitoring the variation of the values of the sums S over time and on the subsequent generation of the control signal which governs the active optical element in a manner ensuring the optimum welding performance.

The main advantage of the laser beam welding device according to the invention consists in that a feedback loop is created which is able to monitor the welding quality and to respond to the variations of the same in real time.

The process itself is then optimized by means of the active optical element, without any need for the operator to intervene into the process and to alter the way the welding parameters, particularly the laser power and the feedrates of the material being welded and the laser beam, are controlled. With welding rigs, which are not primarily equipped with the functions enabling the laser power and/or the feedrate of the laser beam in the course of the welding process, such optimization would be very complicated or even impossible.

It is not necessary to provide a number of test welds any more because the device according to the invention alone is able to perform the optimum adjustment of the active optical element corresponding to the optimum course of the welding process, such adjustment being based on the selected welding parameters, such as the power of the laser beam and the welding speed.

The progression of the welding process is continuously analyzed by a real-time signal processor and positively controlled by means of the active optical element. The three basic elements, namely the active optical element, the sensing unit and the control unit, form along with the laser beam welding system itself a feedback loop enabling the optimum conditions to be obtained and maintained in the whole course of the welding process.

### Industrial applicability

The laser beam welding device according to the invention is particularly useful for industrial processing of metals. The use of the device is advantageous when stringent requirements are placed on the welding quality.

## Claims

1. Laser beam welding device, comprising a laser beam source (1) and an associated optical system (2) of a laser welding head (4), the optical system (2) of the laser welding head (4) including a focusing lens (3) and an active optical element having variable focal length, which is controllable by means of a control unit (9), and at least one photodetector (10) connected to an input of the control unit (9) and adapted for sensing a radiation emitted by a plasma rising from a welding area (11), **characterized in that** the control unit (9) is provided with a frequency analyzer for evaluating signals received from the photodetectors (10).

2. Laser beam welding device according to claim 1, **characterized in that** the active optical element contains a pressure vessel (6), which comprises a resilient mirror (7) for directing and shaping an incident laser beam (5), the resilient mirror (7) forming one wall of the pressure vessel (6), and is connected to a pressure regulator (8) for controlling a pressure inside the pressure vessel (6) in order to adjust a curvature of the resilient mirror (7), a control input of the pressure regulator (8) being connected to a control output of the control unit (9).

3. Laser beam welding device according to claim 1, **characterized in that** the focusing lens (3) is movable along a centre line of the laser beam (5) passing therethrough.

4. Laser beam welding device according to claim 2, **characterized in that** the pressure regulator (8) contains a proportional valve.

5. Laser beam welding device according to claim 1, **characterized in that** the active optical element contains an objective lens having a variable focal length.

6. Laser beam welding device according to claim 1, **characterized in that** the frequency analyser contains a unit for performing Fourier transform.

7. Laser beam welding device according to claim 2, **characterized in that** the pressure vessel (6) is connected to a pump (17) through the pressure regulator (8).

8. Laser beam welding device according to claim 7, **characterized in that** the pump (17) is a fluid pump.

9. Laser beam welding device according to claim 7, **characterized in that** the pump (17) is an air pump.

10. Laser beam welding device according to claim 1, **characterized in that** it further includes an air nozzle (13) arranged in the vicinity of the welding area (11) and directed to a space over the same in order to protect the focusing lens (3) against the spattering molten metal released from a weld pool.

11. Laser beam welding device according to claim 1, **characterized in that** a zone of the air nozzle (13) is separated from the space over the welding area (11) by a diaphragm (12) arranged between the focusing lens (3) and the welding area (11).

12. Laser beam welding device according to claim 1, **characterized in that** it further includes a gas nozzle (14) arranged in the vicinity of the welding area (11) and directed to the to the space over the welding area (11) for an injection of a protective gas to prevent oxidation of the weld.

13. Laser beam welding device according to claim 1, **characterized in that** the active optical element is formed by the resilient mirror (7) for directing and shaping the incident laser beam (5), the resilient mirror (7) being provided with an electromechanical unit for adjusting the curvature of the resilient mirror (7), a control input of said electromechanical unit being connected to the control output of the control unit (9).

14. Laser beam welding device according to claim 1, **characterized in that** the photodetectors (10) are preceded by optical filters for a selection of a spectral band of the respective incident radiation.

15. Method of welding quality control, employing the device according to any of the claims 1 to 14, **characterized in that** the radiation emitted by the plasma cloud rising from the welding area (11) is sensed and afterwards at first the sums (Aᵢ) of the amplitudes within selected frequency bands (i) are calculated from a frequency spectrum determined from a time-based pattern of a strength of said radiation, where (A) is an amplitude within the selected frequency band (i) and (i) is a natural number, subsequently values of selected ratios (Aᵢ/Aⱼ) are calculated, where (j) is a natural number that is different from (i), and finally a shape and a focal length of the welding laser beam (5) are adjusted in accordance with the determined ratios (Aᵢ/Aⱼ).

16. Method of welding quality control, employing the device according to any of the claims 1 to 14, **characterized in that** the radiation emitted by the plasma cloud rising from the welding area (11) is sensed and afterwards the points of a standardized frequency spectrum are determined from a time-based pattern of a strength of said radiation by means of a Fourier transform, each of said points being defined by a respective frequency value and by a corresponding amplitude, subsequently a straight line is interpolated from said points by means of the least-squares method and the sum (S) of the squares of deviations of individual points, which are lying within the frequency spectrum, from the interposed straight line is calculated and finally a shape and a focal length of the welding laser beam (5) are adjusted until a minimum value of the sum (S) is reached.
